# EUROPÄISCHE PATENTSCHRIFT

(11) **EP 2 654 521 B1**
(45) Veröffentlichungstag und Bekanntmachung des Hinweises auf die Patenterteilung: **18.03.2015**
(21) Anmeldenummer: 11790908.5
(22) Anmeldetag: 16.11.2011
(51) Int. Cl.: A47J 27/62

(54) **ELEKTRONIKMODUL FÜR EINE TEMPERATURÜBERWACHTE ZUBEREITUNG VON GARGUT IN EINEM KOCHGEFÄß**
ELECTRONIC MODULE FOR TEMPERATURE-MONITORED PREPARATION OF FOOD IN A COOKING VESSEL
MODULE ÉLECTRONIQUE POUR UNE PRÉPARATION À TEMPÉRATURE CONTRÔLÉE DE PRODUIT À CUIRE DANS UN RÉCIPIENT DE CUISSON

(30) Priorität: 22.12.2010 DE 102010055511
(43) Veröffentlichungstag der Anmeldung: 30.10.2013
(73) Patentinhaber: Fissler GmbH, 55743 Idar-Oberstein (DE)
(72) Erfinder: HEIDRICH, Benjamin, 55743 Idar-Oberstein (DE); HILLENMEIER, Andreas, 55218 Ingelheim (DE); SCHMIDT, Andreas, 55743 Idar-Oberstein (DE)
(74) Vertreter: Patentanwälte Bauer Vorberg Kayser
(86) Internationale Anmeldenummer: PCT/EP2011/070294
(87) Internationale Veröffentlichungsnummer: WO 2012/084356

(56) Entgegenhaltungen:
- EP-A1- 1 591 049
- WO-A1-96/31739
- DE-A1- 4 410 263
- FR-A1- 2 945 608
- US-A1- 2001 003 335
- US-A1- 2005 285 735
- US-B1- 6 615 706

## Beschreibung

Die Erfindung betrifft ein Elektronikmodul für eine temperaturüberwachte Zubereitung von Gargut in einem Kochgefäß mit einem Bodensensor zur Erfassung der Temperatur des Bodens des Kochgefäßes und mit einer vorzugsweise dem Bodensensor und/oder weiteren Sensoren zugeordneten Kommunikationseinrichtung zur Signalübertragung der erfassten Temperatur an eine Steuerung 10 oder Regelung der Heizleistung der Kochstelle zur Erwärmung des Kochgefäßes. Ferner betrifft die Erfindung ein Kochgefäß mit dem erfindungsgemäßen Elektronikmodul.

Es sind verschiedene Systeme für die temperaturüberwachte Zubereitung eines Garguts bekannt, die auch unter dem Begriff "automatisches Kochen" verbreitet sind. Wesentlicher Bestandteil dieses Konzepts zum automatischen Kochen ist die Messung der Temperatur eines Kochgefäßes. Aus der gemessenen Temperatur lassen sich Rückschlüsse auf die Temperatur und den Garzustand des Garguts ziehen. Die erfasste Temperatur kann nur angezeigt und/oder zur automatischen Regelung des für das jeweilige Gargut vorgesehenen Kochprozesses, bspw. dem Einhalten vorgegebener Temperaturprofile für unterschiedliches Gargut, verwendet werden.

Zu diesem Zweck werden Temperatursensoren eingesetzt, die die gemessene Temperatur an eine Regelung oder Steuerung der Heizleistung für das Kochgefäß übermitteln. Abhängig vom jeweiligen Temperaturprofil erhöht oder reduziert die Regelung des Herdes auf Basis der rückgeführten Ist-Temperaturwerte die Heizleistung der Kochstelle, bspw. einer Herdplatte, um die Temperaturbedingungen in dem Kochgefäß auf das für das Gargut optimale Profil einzustellen.

Die Messung einer Temperatur im Bereich des Topfbodens erweist sich dabei für eine Vielzahl von Anwendungen als gut geeignet, denn sie ist sowohl für das Braten als auch für das Kochen geeignet. Beispielsweise ist eine solche Messung im Bereich des Topfbodens in der US 2005/0285735 A1, der DE 44 10 263 und der EP 1 59 1 049 A1 beschrieben. In diesem Zusammenhang bietet auch die kombinierte Betrachtung der Temperaturwerte an den unterschiedlichen Positionen des Kochtopfes Vorteile, weil je nach Gargut/Topfinhalt unterschiedliche Wärmeverteilungen in dem Kochgefäß vorherrschen können, die es bei der Rege lung oder Steuerung der Heizleistung zu berücksichtigen gilt.

Generell ist die Qualität der Temperatursignale maßgebend für den Erfolg des automatschen Kochprozesses.

Der aus der DE 33 41 234 C1 bekannte Ansatz zur Umsetzung eines automatischen Kochsystems auf Basis von Temperaturmesswerten sieht einen mit Abstand zu dem Kochtopf angeordneten Strahlungsfühler mit einer Fokussiereinrichtung vor, der auf eine ringförmig umlaufende Abstrahlfläche auf dem Kochtopf gerichtet ist und die Temperatur auf Basis der abgestrahlten elektromagnetischen Strahlung misst, deren Intensität im Zusammenhang mit der Temperatur steht.

Die aus der DE 38 11 925 C1 bekannte Vorrichtung zum Regeln der Heizleistung sieht einen vergleichbaren Temperaturabgriff vor. Ein Temperatursensor, der nach der Art eines Strahlungsempfängers arbeitet, nimmt die von der Topfwand des Kochgefäßes abgestrahlten elektromagnetischen Wellen auf. Über einen Verstärker ist der Sensor an eine Logikschaltung und eine Leistungsstufe zum Einstellen der Heizleistung gekoppelt. Unterhalb der Kochplatte ist ein weiterer Sensor angeordnet, der mit der Unterseite der Kochplatte in wärmeleitendem Kontakt steht. Ein dritter Sensor ist an der Außenwand des Kochtopfes angeordnet.

Gemäß der Offenbarung der DE 35 10 542 A1, die eine Vorrichtung zur Steuerung des Garprozesses in einem Dampfdruckkochtopf beschreibt, ist ein Temperatursensor in den Topfdeckel integriert und über ein Kabel mit einer Steuerung des Kochsystems verbunden.

Der aus der DE 39 28 620 A1 bekannte Kochherd mit Steuerung der Energie-5 zufuhr sieht ein spezielles Kochgeschirr mit einem externen Sensor zur Messung der Temperatur des Kochgutes und einem Sensor zur Messung der Temperatur des Topfbodens vor, der im Topfboden eingelassen ist. Die Sensoren sind an einen äußeren Anschluss angeschlossen, welcher über ein elektrisches Verbindungskabel mit dem Herd verbunden ist, wenn das Kochgeschirr zum Kochen mit einem automatischen Kochprogrammablauf genutzt wird. Die Temperaturwerte werden einer elektronischen Schaltung zur Regelung der Energiezufuhr zugeführt, die dann die Heizleistung der Kochplatte regelt, um die Gartemperatur und -zeit zu bestimmen und einzuhalten.

Die aus der DE 10 2006 022 327 A1 bekannte Vorrichtung zur Steuerung und Regelung der Heizleistung einer Kochplatte beinhaltet unter anderem einen Sensor, der unterhalb des Kochgefäßes angeordnet ist und die Temperatur durch Kontakt mit der Unterseite des

Kochgefäßes abgreift. Zu der Sensorik gehören ferner Mittel zu drahtlosen Signalverbindung, über die die Sensorik mit einer Steuer- bzw. Regeleinheit verbunden ist, die die Heizleistung des Kochfeldes in Abhängigkeit der Temperaturinformationen einstellt.

Gerade zur Messung der Bodentemperatur des Kochgefäßes sehen die bekannten Systeme entweder Temperatursensoren vor, die in das Kochgefäß fest eingebracht sind oder die auf der Oberfläche des Gefäßbodens anliegen. Eingebrachte Sensoren verteuern jedoch jedes Kochgefäß und schließen zudem ein Nachrüsten einfacher Kochgefäße oder ein Ersetzen defekter Sensoren aus. Sensoren, die nicht unmittelbar in ein Kochgefäß eingebracht sind, können anfällig für Messfehler sein, die durch Verschmutzungen, Verkrustungen oder eine Ablösung an der Kontaktstelle verursacht werden. Darunter leiden letztlich die Regelgüte des Kochsystems und die Qualität der zubereiteten Speisen. Als negativ erweist sich außerdem das notwendige Ausrüsten des Kochherdes mit einem Temperatursensor an jedem Kochfeld und der dazugehörigen Elektronik zum Weiterleiten der Messwerte an die Heizleistungsregelung. Dies ist kostenintensiv und mit einem hohen Aufwand verbunden.

Aufgabe der vorliegenden Erfindung ist es, eine Möglichkeit zur qualitativ hochwertigen Temperaturmessung für die temperaturüberwachte Zubereitung von Gargut in einem Kochgefäß vorzuschlagen, welche den Aufwand für das Vorbereiten von Kochgefäß und Kochherd für das automatische Kochen reduziert und flexibel bei verschiedenen Kochgefäßen eingesetzt werden kann.

Diese Aufgabe wird erfindungsgemäß mit den Merkmalen des Anspruchs 1 gelöst. Dabei ist insbesondere vorgesehen, dass der Bodensensor ein in eine Aufnahme in dem Boden des Kochgefäßes ein- und ausführbares Fühlerelement aufweist, welches gelenkig an dem Gehäuse des Elektronikmoduls festgelegt ist. Der Bodensensor ist vorzugsweise über ein Kabel mit der Kommunikationseinrichtung des Elektronikmoduls verbunden.

Das Elektronikmodul stellt in dieser Form eine separate, jederzeit von dem Kochgefäß lösbare Einheit dar, die lediglich bei Bedarf an dem Kochgefäß angebracht wird, indem der Bodensensor mit dem Fühlerelement in den Gefäßboden des Kochgefäßes gesteckt wird. Das Elektronikmodul überträgt die durch den Bodensensor und ggf. weitere Sensoren erfasste Temperatur an die Heizleistungsregelung bzw. -steuerung.

Das Elektronikmodul wird durch Einstecken des Fühlerelements des Bodensensors Betrieb an dem Kochgefäß gehalten, kann aber zum Reinigen des Kochgefäßes einfach wieder entfernt werden. Die gelenkige Anbindung des Fühlerelements bzw. Bodensensors an das Elektronikmodul, insbesondere ein Drehgelenk, sorgt dafür, dass das Elektronikmodul auf ein breites Spektrum von Töpfen und Pfannen verschiedener Geometrie aufgesteckt werden kann. Diese müssen lediglich mit einer geeigneten Aufnahme im Kochgefäßboden versehen sein. Dass schafft die Möglichkeit, ein einziges Elektronikmodul für eine Vielzahl von Kochgefäßen auch unterschiedlicher Form zu verwenden. Die Anschaffungskosten und die Kosten für das Realisieren des automatischen Kochens sind folglich sehr gering.

Der Temperaturabgriff im Kochgefäßboden sorgt für eine hohe Genauigkeit bei der Messung der Temperatur im Bodenbereich des Kochgefäßes und damit in unmittelbarer Nähe an der Kontaktstelle zum Gargut, wobei die weitergeleiten Mess- bzw. Signalwerte zur Steuerung herangezogen werden, um für eine hohe Regelgüte beim Einstellen der Heizleistung sorgen. Das Elektronikmodul kann unabhängig von der Art der Wärmezufuhr verwendet werden. Es ist sowohl für Kochen mit Induktion als auch für herkömmliche Herdarten, bspw. Ceran- oder Massekochplatten, geeignet. Zudem können die Energiekosten durch die hohe Messgenauigkeit gesenkt und der Einsatzbereich automatisierter Kochsysteme erweitert werden. Optimale Verwendung findet das Elektronikmodul in dieser Variante beim Braten und beim Zubereiten geringer Füllmengen. Hierfür ist die Erfassung der Bodentemperatur des Kochgefäßes besonders sinnvoll, um ein Anbrennen des Garguts zu vermeiden.

Gemäß einer bevorzugten Ausführungsform der Erfindung sind das Fühlerelement und/oder der gesamte Bodensensor stabförmig ausgebildet. Ein stabförmiges Element bzw. ein stabförmiger Sensor ist in der quer zur Stabachse ausgebildeten Grundfläche vorzugsweise klein ausgebildet derart, dass es/er in eine bohrungsähnliche Ausnehmung in dem Boden des Kochgefäßes eingeschoben und herausgezogen werden kann.

Einfacher Weise kann das stabförmige Fühlerelement einen runden Querschnitt aufweisen. Um gleichzeitig eine Verdrehsicherung zu erreichen, kann das stabförmige Element zumindest abschnittsweise auch einen nicht runden, insbesondere nicht rotationssymmetrischen Querschnitt haben. Dies kann durch das Vorsehen von Kerben, Nuten, Vorsprüngen oder dgl. oder auch eine eckige, bspw. quadratische Grundfläche des stabförmigen Elements erreicht werden.

Fühlerelement und Bodensensor können auch in einem gekapselten Sensorelement zusammengefasst sein. Als Sensoren kommen auch Oberflächenwellensensoren in Frage, die bspw. mit einer gemeinsamen Antenne in Verbindung stehen. In einer einfachen Ausführungsform kann das Elektronikmodul auch nur als den Bodensensor mit Fühlerelement enthaltende Hülse mit einer an den Bodensensor angeschlossenen Antenne ausgebildet sein.

Eine weitere vorteilhafte Ausführungsform der Erfindung sieht vor, dass das Elektronikmodul kraftschlüssig, insbesondere mittels eines Magneten, und/oder formschlüssig, insbesondere mittels eines metallischen Klettverschlusses, an der Außenwand des Kochgefäßes befestigbar ist. Dadurch kann das Elektronikmodul auf einfache Art und Weise an dem Kochgefäß befestigt und wieder davon entfernt werden. Durch diese Art der Befestigung wird auch eine sehr einfache Verdrehsicherung geschaffen, die sicherstellt, dass die in dem Elektronikmodul befindlichen Elemente mit dem notwendigen Abstand von der Kochplatte vorgesehen sind und nicht beschädigt werden können. Gleichzeitig ist die Ausrichtung der Sende- und Empfangseinrichtungen von Elektronikbauteil und Heizleistungsregelung bzw. -Steuerung genau definiert.

Die Art der Befestigung sowohl durch Einschieben des gelenkig mit dem Gehäuse des Elektronikmoduls verbundenen Fühlerelements als auch durch kraft-und/oder formschlüssige Verbindung eines Befestigungsabschnitts des Elektronikmoduls (Magnet, metallischer Klettverschluss) führt ferner zu einem nur geringen Wärmeübertrag von dem erhitzen Kochgefäß auf den Elektronikmodul und die in dem Gehäuse des Elektronikmoduls aufgenommenen elektronischen Bauteile. Dies ist für die Funktion und Lebensdauer der elektronischen Bauteile von Vorteil.

Um ein möglichst breites Spektrum an Kochprogrammen abdecken und die Regelgenauigkeit erhöhen zu können, kann gemäß einer besonders bevorzugten Ausführungsform der Erfindung vorgesehen sein, dass das Elektronikmodul wenigstens einen weiteren Temperatursensor mit einer zugeordneten Kommunikationseinrichtung aufweist. Der weitere Temperatursensor kann erfindungsgemäß zur Messung der Temperatur an der Außenwand des Kochgefäßes vorgesehen sein.

Vorzugsweise kann dem weiteren Temperatursensor, bspw. einem Wandtemperatursensor, der Magnet zur Befestigung des Elektronikmoduls an der Außenwand des Kochgefäßes zugeordnet sein. Sofern die Außenwand des Kochgefäßes nicht magnetisch ist, kann an der Außenwand eine magnetische oder magnetisierbare Plakette, bspw. aus ferritischem Stahl, festgelegt sein, die in der Regel auch gut wärmeleitend ist. Eine solche Plakette lässt sich erfindungsgemäß natürlich auch dann einsetzten, wenn dem Magneten zum Befestigen des Elektronikmoduls an der Außenwand des Kochgefäßes kein Temperatursensor zugeordnet ist.

Die einem weiteren Sensor zugeordnete Kommunikationseinrichtung kann die Kommunikationseinrichtung sein, welche auch dem Bodensensor zugeordnet ist. Alternativ kann einem oder jedem weiteren Temperatursensor auch eine eigene Kommunikationseinrichtung zugeordnet sein. Ein Temperatursensor ist mit einer Kommunikationseinrichtung elektrisch leitend und/oder wärmeleitend verbunden. Dies kann über ein Kabel erfolgen. Es ist erfindungsgemäß auch möglich, den Temperatursensor und die zugeordnete Kommunikationseinrichtung als integriertes Bauteil auszubilden, bspw. als Oberflächenschallwellensensor (SAW). Insbesondere im letzteren Fall weisen die integrierten Temperatursensoren mit Kommunikationseinrichtungen vorzugsweise eine gemeinsame Antenne auf, über welche die Daten ausgesendet werden. Unabhängig von der Art der Sensoren können erfindungsgemäß einem oder mehreren Sensoren zugewiesene Kommunikationseinrichtungen eine gemeinsame Antenne verwenden.

Das Vorsehen eines weiteren Temperatursensors oder mehrerer weiterer Temperatursensoren ermöglicht vorteilhaft die kombinierte Nutzung von zwei oder mehr Sensoren, die zusätzlich zu einer Bodentemperatur des Kochgefäßes beispielsweise auch die Temperatur der Wand des Kochgefäßes, bei mehreren Sensoren ggf. sogar in verschiedenen Höhen, messen. Die Mehrzahl an Temperaturinformationen kann dann durch eine Heizleistungsregelung oder -Steuerung ausgewertet werden, und die für das jeweilige Gargut optimale Zubereitungstemperatur kann schneller und exakter eingestellt werden. Der gesamte Zubereitungsvorgang wird dadurch optimiert.

Automatische Kochsysteme mit einer Temperaturmessung im Topfboden sind ideal zum Braten und Kochen geeignet, weil sich die Temperatur des Garguts in vielen Fällen aus der Temperatur des Topfbodens ableiten lassen. Diese Systeme neigen dazu, das Gargut langsam zu erhitzen, da sie die Temperatur des Topfbodens begrenzen.

Dies hat den Vorteil, dass das Gargut beim Braten und Kochen mit wenig Flüssigkeit, bspw. Dünsten, nicht anbrennt. Mit steigender Füllhöhe und bei schlechter Wärmeleitung des Garguts brauchen solche Systeme jedoch sehr lange, bis die gewünschte Zieltemperatur im gesamten Gargut erreicht ist. Für solche Systeme ist
es vorteilhaft, zusätzlich die Temperatur der Wand des Kochgefäßes zu messen und bei der Heizleistungsregelung bzw. -Steuerung zu berücksichtigen. Dies wird erfindungsgemäß durch das eine Elektronikmodul ermöglicht. Das eine Elektronikmodul mit mindestens zwei Temperatursensoren eignet sich somit auch für große Füllmengen und zum Aufwärmen von Speisen, für die eine Vielzahl von Temperatursensoren vorteilhaft ist.

Eine weitere Ausbildungsform der Erfindung sieht vor, dass die Kommunikationseinrichtung zur drahtlosen Signalübertragung eingerichtet ist. Die Heizleistungsregelung kann hierfür mit einem entsprechenden Signalempfänger ausgestattet sein. Dadurch kann auf ein Kabel, das von dem Elektronikmodul zu einem Kochherd verläuft, verzichtet werden. Das erleichtert die Vorbereitungen für den Kochvorgang, und man ist beim Kochen durch die Kabel von den Kochgefäßen zu dem Herd nicht behindert. Zudem wird die Sicherheit durch den Verzicht auf ein brennbares Kabel erhöht.

Idealerweise Weise ist der Elektronikmodul erfindungsgemäß passiv, also ohne eigene Energieversorgung bspw. durch eine Batterie oder ein Stromkabel, ausgebildet. Die für die Temperaturmessung in dem Elektronikmodul benötigte Energie wird in diesem Fall bei der drahtlosen Übertragung bspw. durch induktive Kopplung übertragen und/oder durch eine Oberflächenschallwellentechnologie (SAW) erzeugt. Es ist auch möglich, dass ein Sensor und eine Kommunikationseinrichtung als integrierter Sensor, bspw. als Oberflächenschallwellensensor, ausgebildet sind. Dies erlaubt einen elektronisch einfachen Aufbau des Elektronikmoduls bei gleichzeitig hoher Verlässlichkeit des Sensorsystems.

Die Kommunikationseinrichtung kann gemäß einer bevorzugten Ausführungsform der Erfindung als RFID-Chip und/oder SAW-Chip ausgebildet sein. Bei 25 diesen Einrichtungen werden eine induktive Kopplung oder Oberflächenwellen zur drahtlosen Übertragung und Energiegewinnung für Sensoren zur Temperaturmessung und Signalübertragung genutzt.

Der RFID-Chip ist dann vorzugsweise über ein Kabel mit den Temperatursensoren, insbesondere dem Bodentemperatursensor oder dem Wandtemperatursensor verbunden. Zusätzlich kann der RFID-Chip einen internen Temperatursensor zur Überwachung der Temperatur des Chips selbst aufweisen. Temperatursensoren, insbesondere die mit dem RFID-Chip verbundenen oder darin integrierten Temperatursensoren, können als PT1000 Widerstandsthermometer 5 ausgebildet sein. Es ist erfindungsgemäß aber auch möglich, die Sensoren, bspw. die Wand- oder Bodentemperatursensoren, als Thermoelemente oder andere Sensoren auszubilden. Der RFID-Chip sowie die ggf. angeschlossenen Temperatursensoren werden über induktive Kopplung von einer bspw. als Schreib-Lese-Einheit ausbildete Sende- und Empfangseinrichtung des Kochfeldes mit Energie versorgt. Der RFID-Chip funkt in regelmäßigen Zeitabständen vorzugsweise größer als 1 Sekunde die von den Sensoren erfasste Temperatur als Temperatur- oder Sensorsignalwerte an die Schreib-Lese-Einheit bzw. Sende- und Empfangseinrichtung des Kochfelds. In das Elektronikmodul integriert ist auch eine an den oder jeden RFID-Chip angeschlossene Antenne, die bspw. als rechteckige Kupferspule ausgebildet sein und etwa die Abmessungen des Elektronikmoduls aufweisen kann. Mit dieser Antennenanordnung lässt sich eine zuverlässige Signalübertragung erreichen.

Dazu kann in dem Kochfeld erfindungsgemäß eine ringförmige Antennenspule ausgebildet sein, die mit der Schreib-Lese-Einheit bzw. Sende- und Empfangseinrichtung des Kochfelds verbunden ist. Vorzugsweise weist diese etwa den Durchmesser des größten verwendeten Topfes auf und ist konzentrisch zum Mittelpunkt des Kochfeldes angeordnet. Bei aus Glaskeramik bestehenden Kochfeldern hat sich erfindungsgemäß eine Anordnung etwa 1 cm unter der Glaskeramikplatte bewährt, um eine gute Sende- und Empfangsleistung bei vertretbarer Wärmeentwicklung zu erreichen. Diese Geometrie und Anordnung ist besonders bevorzugt, um mit den verwendeten RFID-Chips eine zuverlässige Funkkommunikation zu erreichen.

Bei der erfindungsgemäßen Verwendung von SAW-Chips ist ein Temperpatursensor, bspw. der Boden- oder der Wandtemperatursensor, vollständig in den SAW-Chip und dessen Gehäuse integriert. Die SAW-Chips bilden in vergleichbarer Funktion zu den RFID-Chips auch die einem jeweiligen Sensor zugeordnete Kommunikationseinrichtung des Elektronikmoduls, um mit der Schreib-Lese-Einheit bzw. Sende- und Empfangseinrichtung des Kochfelds zu kommunizieren. Die in dem

Elektronikbaustein vorhandenen SAW-Chips sind vorzugsweise über ein Kabel mit einer gemeinsamen Antenne verbunden. Die SAW-Chips haben gegenüber den RFID-Chips den Vorteil einer wesentlich besseren Beständigkeit gegenüber hohen Temperaturen. So kann bei einem Bodentemperatursensor mit einem Durchmesser von etwa 3mm eine Temperaturbeständigkeit bis 350°C und einem etwas größeren Wandtemperatursensor eine Temperaturbeständigkeit von 180°C bis 200°C erreicht werden. Diese Temperaturen sind im Kochbetrieb wünschenswert.

Der oder die SAW-Chips werden durch die Sende- und Empfangseinrichtung der Kochstelle (des Kochfeldes) mittels Funkwellen abgefragt. In dem SAW-Chip werden die Funkwellen in Oberflächenschallwellen umgewandelt. Diese werden von dem Substrat der Chips reflektiert und wieder in Funkwellen umgewandelt. Über die angeschlossene Antenne im Elektronikmodul werden diese Funkwellen zurück an die Sende- und Empfangseinrichtung des Kochfeldes gesendet. Aus dem Antwortsignal kann dann z.B. über den Zeitabstand der Echos auf die Temperatur des Substrates geschlossen werden.

Nach Empfang der Temperatur- oder Signalwerte leitet die Schreib-Lese-Einheit diese an die Heizleistungssteuerung oder -regelung der Kochstelle (respektive des Kochfeldes) weiter, welche dann die Leistung des Kochfeldes entsprechend vorgegebener und/oder durch den Benutzer ausgewählter bzw. parametrierter Garprogramme einstellt. Dadurch stellt sich eine optimierte Temperatur für das gewählte Gericht im Kochgefäß ein.

Eine erfindungsgemäß geeignete Übertragungsfrequenz des Signals kann bei 12 bis 14 MHz, beispielsweise bei 13,56 MHz oder 433 MHz, oder auch im Bereich 2,4 GHZ liegen. Grundsätzlich steht es dem Fachmann frei, im Rahmen üblicher Technologien eine geeignete Übertragungsfrequenz auszuwählen.

Gemäß einer sinnvollen Ausführungsform der Erfindung ist das Elektronikmodul zumindest abschnittsweise, insbesondere in Richtung des Signalempfängers und/oder der Kochstelle (in Gebrauch also zu der von der Topfoberfläche abgewandten Seite) für Funkwellen durchgängig ausgebildet, also vorzugsweise nicht aus leitendem Metall, um die Übertragungssignale nicht abzuschwächen. Vorteilhafterweise liegt zwischen der Kommunikationseinrichtung und einem Signalempfänger der Steuerung und/oder Regelung des Herdes auch ein möglichst geringer Abstand, wenn das Elektronikmodul
an dem Kochgefäß befestigt ist und sich das Kochgefäß auf der Kochstelle befindet. Das garantiert eine zuverlässige Funkübertragungsstrecke.

Um das automatische Kochen und die Regelung bzw. Steuerung der Heizleistung weiter zu verbessern, kann das Elektronikmodul ferner einen Anschluss für einen externen Temperatursensor, bspw. ein Kernthermometer zur direkten Messung des Garguts in dem Kochgefäß, aufweisen. Dieser kann als kabelgebundener, aber auch als drahtloser Anschluss ausgebildet sein. Hierdurch lässt sich die Qualität des automatischen Kochens weiter verbessern. Dabei ist es für die Kommunikation mit der Heizleistungsregelung bzw. -Steuerung der Kochstelle vorteilhaft, dass auch das Signal dieses Temperatursensors durch das Elektronikmodul übertragen wird, weil so eine gute, den anderen Temperatursignalen vergleichbare Empfangbarkeit erreicht wird. Im Falle einer drahtlosen Kommunikationsanbindung des externen Temperatursensors an das Elektronikmodul kann dieser die Funktion eines Routers übernehmen und das aus dem gut geschirmten Topfinneren austretende Signal zuverlässig weiterleitet.

Die Erfindung bezieht sich ferner auf ein Kochgefäß zur Verwendung mit dem vorbeschriebenen, erfindungsgemäßen Elektronikmodul und weist in seinem Boden eine Aufnahme für den Bodensensor oder das Fühlerelement des Bodensensors auf. Dies kann auf einfache Art und Weise durch eine Bohrung 5 oder ähnliches realisiert werden. Ein nicht zu vernachlässigender Gesichtspunkt ist dabei die durch die Erfindung offerierte Nachrüstbarkeit für automatisches Kochen in Bezug auf einfache Kochgefäße. Diese müssen nicht mit elektronischen Bauteilen, sondern lediglich mit einer Aufnahme für den Bodensensor versehen werden. Das bedeutet ein erhebliches Potenzial zur Kosteneinsparung kaufen, bzw. kann bestehendes Kochgeschirr durch bspw. eine Servicemaßnahme auch für den Einsatz mit dem erfindungsgemäßen Elektronikmodul nachrüsten lassen. Dies ist zumindest bei hochwertigem Kochgeschirr auch unter finanziellen Gesichtspunkten sinnvoll.

Für die Aufnahme kann eine Tiefe von 20 bis 70 mm, vorzugsweise von 30 bis 60 mm vorgesehen sein, wobei die Maximaltiefe der Aufnahme den halben Durchmesser des Gefäßbodens nicht überschreiten sollte, um Ungenauigkeiten durch Randeffekte am Rand des Kochgefäßbodens auszuschließen. Das garantiert eine effektive Messung der tatsächlichen Temperaturverhältnisse im Gefäßboden bei ausreichender Stabilität des Kochgeschirrs. Gleichzeitig kann das Elektronikmodul und insbesondere
das Fühlerelement des Bodensensors klein ausgeführt und kostengünstig produziert werden.

Besondere Vorteile ergeben sich, wenn die Aufnahme eine in dem Gefäßboden angeordnete Hülse, insbesondere eine mit dem Gefäßboden verschweißte Edelstahlhülse, aufweist. Gerade bei Kochgefäßen mit einem Aluminiumkern verhindert diese Variante Korrosion in der Aufnahme und ermöglicht so die Reinigung des Kochgefäßes in einer Spülmaschine.

In Weiterbildung des Erfindungsgedankens kann auch vorgesehen sein, dass die Aufnahme mit einer Verdrehsicherung ausgebildet ist. Diese kann bspw. eine eckige Form oder eine Führung (Nut, Zapfen oder dgl.) aufweisen und stellt dadurch sicher, dass der Elektronikmodul nicht zum Kochfeld hin verschwenkt, 5 sondern in seiner Lage stets gegen eine Verdrehung gesichert ist. Vorteilhafterweise hat der Bodensensor eine der Aufnahme entsprechende Form.

Eine weitere, vorteilhafte Ausführungsform sieht vor, dass die Außenwand des Kochgefäßes Elemente zur kraft- und oder formschlüssigen Befestigung des Elektronikmoduls, insbesondere eine befestigbare Plakette aus ferritischem Stahl oder einen metallischen und/oder magnetischen Klettverschluss aufweist. Eine Plakette kann bspw. mittels Schweißen oder Kleben an der Außenwand befestigt werden. Das Befestigungselement stellt nicht nur eine Verdrehsicherung dar, sondern kann gleichzeitig eine weitere Messstelle für einen Temperatursensor an der Außenwand des Kochgefäßes bilden. Das Befestigungselement kann so ausgestaltet sein, dass der Temperatursensor unmittelbar an der Außenwand bzw. der Plakette anliegt oder die Temperatur über das Befestigungselement abgreift. Die Fertigungskosten für eine erfindungsgemäße Plakette sind gering und jedes Kochgefäß kann unter geringem Aufwand mit diesem Befestigungselement nachgerüstet.

Es kann ferner vorgesehen sein, innerhalb des Kochgefäßes Anschlussmöglichkeiten für weitere, externe Temperatursensoren vorzusehen, die vorzugsweise auch dem erfindungsgemäßen Elektronikmodul derart zugeordnet sind, dass die Übertragungssignale des externen Temperatursensors über den Elektronikmodul an die Heizleistungsregelung bzw. Steuerung der Kochstelle übertragen werden. Dadurch ist es bspw. möglich, einen Bratsensor direkt in das Bratgut einzustecken oder einen Sensor in flüssige Lebensmittel einzutauchen. Die Temperatursignale werden dann über den Elektronikmodul an die Heizleistungsregelung übermittelt. Durch die

Kombination der verschiedenen Temperatur-Signale wird eine besonders hohe Qualität des Kochprozesses erreicht. Die Anschlussmöglichkeit kann ein Anschluss zum Einstecken eines kabelgebundenen Temperatursensors sein. Es ist aber auch denkbar, die Anschlussmöglichkeit als einen Antennendurchgriff durch eine drahtlose Übertragungssignale 5 abschirmende Kochgefäßwand auszubilden und darüber einen drahtlosen Anschluss des weiteren Temperatursensors an den Elektronikmodul zu ermöglichen.

Weitere Merkmale, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1:: das erfindungsgemäße Elektronikmodul mit eingeklapptem Bodensensor in einer perspektivischen Ansicht;
- Fig. 2:: das Elektronikmodul nach Fig. 1 mit ausgeklapptem Bodensensor;
- Fig. 3:: die Topfwand eines erfindungsgemäßen Kochgefäßes zur Befestigung des Elektronikmoduls gemäß Fig. 1 in einer Detailansicht;
- Fig. 4:: das an der Wand des Kochgefäßes gemäß Fig. 3 festgelegte Elektronikmodul gemäß Fig. 1 in einer Schnittansicht; und
- Fig. 5:: das gemäß Fig. 4 an der Wand des Kochgefäßes festgelegte Elektronikmodul in einer perspektivischen Ansicht.

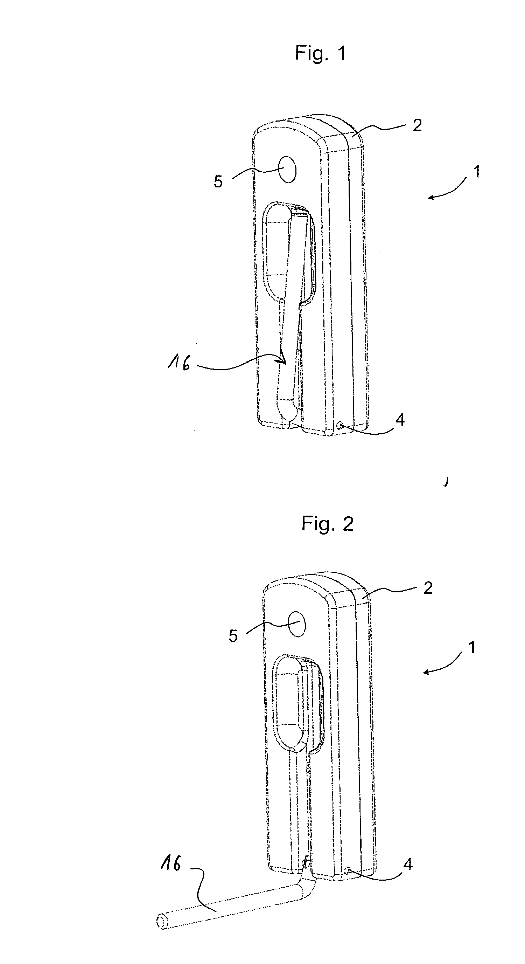

Das in der Fig. 1 dargestellte Elektronikmodul 1 weist ein längliches Gehäuse 2 und einen Bodensensor 3 zur Temperaturmessung auf. Der Bodensensor 3 ist dazu mit einem Fühlerelement 16 ausgestattet, das in eine Ausnehmung in einen Boden eines Kochgefäßes einführbar ausgebildet ist. Zum Schutz der 5 eigentlichen Sensorik vor eindringender Feuchtigkeit oder Beschädigungen ist der Bodensensor 3 bzw. das Fühlerelement 16 gekapselt ausgebildet und besitzt ebenfalls eine langgestreckte Form, die einfach in eine Ausnehmung des Kochgefäßes einführt und wieder herausgezogen
werden kann. Über ein Drehgelenk 4 ist der Bodensensor 3 mit dem Gehäuse 2 verbunden.

Im oberen, dem Drehgelenk 4 gegenüberliegenden Bereich des Elektronikmoduls 1 ist ein weiterer Temperatursensor 5 vorgesehen, der mit der Oberfläche des Gehäuses 2 im Wesentlichen fluchtet oder geringfügig über diese Oberfläche hinaussteht. Fig.1 zeigt den Elektronikmodul 1 im eingeklappten Zustand, in dem der Bodensensor 3 bzw. das Fühlerelement 16 des Bodensensors 3 über das Drehgelenk 4 zum Gehäuse 2 hin geklappt und in einem zentralen Abschnitt in einer Aussparung des Gehäuses 2 aufgenommen ist. Im eingeklappten Zustand erhält der Elektronikmodul 1 dadurch eine kleine und kompakte Form.

Zum Kochen bzw. Anbringen an dem Kochgefäß wird der Bodensensor 3 aus der Ausnehmung heraus geschwenkt, wie in Fig. 2 dargestellt. Das Elektronikmodul 1 kann nun an einem Kochgefäß angebracht werden, indem der Bodensensor 3 bzw. dessen Fühlerelement 16 in eine Aufnahme in dem Boden des Kochgefäßes eingeschoben wird.

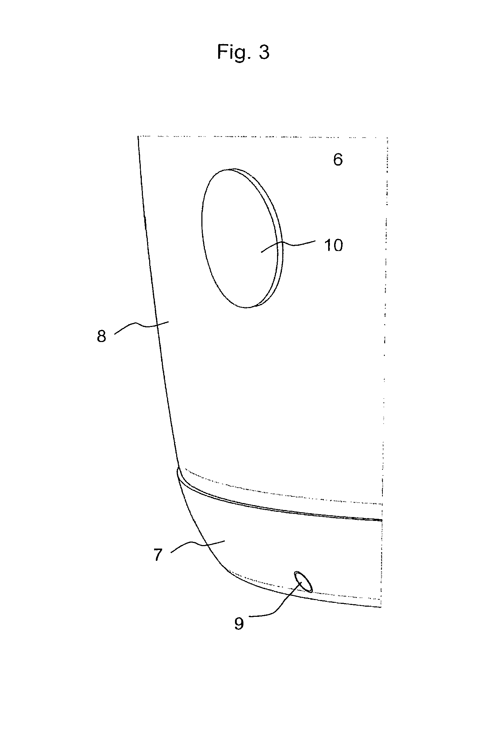

Fig. 3 zeigt in einem Detailausschnitt den bodenseitigen (unteren) Bereich eines Seitenabschnitts eines als Kochtopf ausgebildeten Kochgefäßes 6 mit einem Topfboden 7 und einer sich von dem Topfboden 7 (nach oben) erstreckenden Topfwand 8. Seitlich in dem Topfboden 7 befindet sich eine als Öffnung bzw. Bohrung ausgebildete Aufnahme 9 für den stabförmigen Bodensensor 3 bzw. dessen Fühlerelement 16, die sich radial in den Topfboden 7 erstreckt. Über der Aufnahme 9 ist an der Topfwand 8 eine Plakette 10 aus ferritischem 5 bzw. magnetischem Stahl befestigt, bspw. durch Verschweißen oder Verkleben. Die Plakette 10 dient unter anderem der Fixierung des Elektronikmoduls 1 an dem Kochtopf 6, der im Bereich des weiteren Temperatursensors 5 magnetisch ausgebildet ist und so an der ebenso magnetischen bzw. magnetisierbaren Plakette 10 festgelegt werden kann. Vorzugsweise ist die Plakette 10 ausgehend von der Ausnehmung 9 in vertikaler Richtung oberhalb der Ausnehmung 9 an der Topfwand 8 derart angeordnet, dass eine auf der Topfoberfläche verlaufende Verlängerung der Verbindungslinie von Ausnehmung 9 und Plakette 10 in einem (bezogen die Richtung der Topfoberfläche) rechten Winkel auf eine durch die Standfläche des Topfes definierte Ebene trifft.

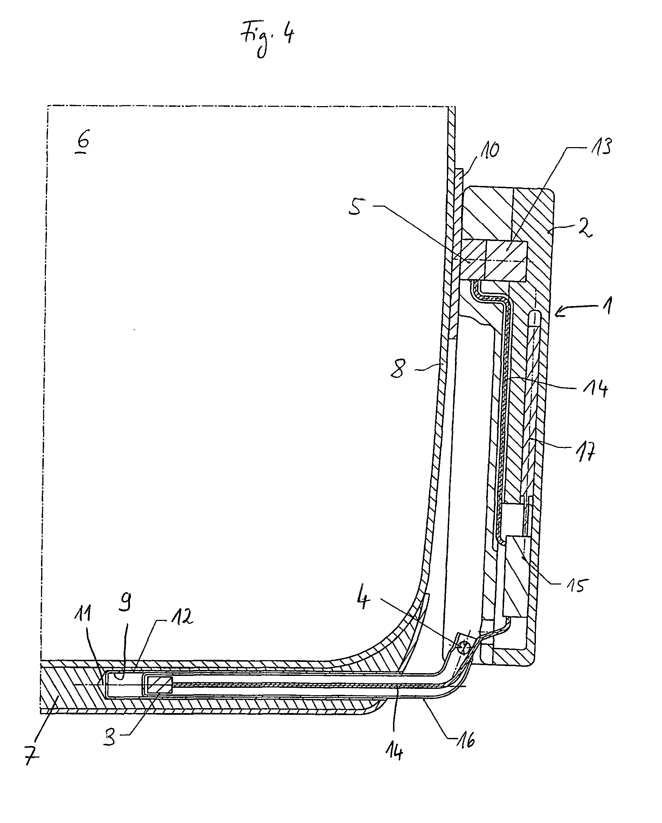

Für einen Kochvorgang wird das Elektronikmodul 1 an dem Kochtopf 6 wie in Fig. 4 dargestellt befestigt, indem das Fühlerelement 16 mit dem Bodensensor 3 (Bodentemperatursensor) in die Aufnahme 9 des Topfbodens 7 gesteckt wird. Dazu verläuft eine Bohrung 11 der Aufnahme 9 von der Seitenwand des Topfbodens 7 radial in Richtung Topfmitte. In die Bohrung 11 ist eine Hülse 12 aus Edelstahl eingebracht, die mit dem Topfboden 7 laserverschweißt ist, wodurch dieser gegen Korrosion geschützt ist. Hierdurch ist der Topf mit der Aufnahme 9 auch spülmaschinengeeignet.

Der Bodensensor 3 befindet sich mit der Hülse 12 in wärmeleitendem Kontakt, wodurch eine hohe Messgenauigkeit sichergestellt wird. Darüber hinaus wird das Elektronikmodul 1 durch die Passung zwischen der Hülse 12 und dem Bodensensor 3 bzw. dem Fühlerelement 16 sowohl horizontal als auch vertikal fixiert.

Das Gehäuse 2 des Elektromoduls 1 ist über das Drehgelenk 4 an die Topfwand 8 angeklappt, wodurch der Temperatursensor 5 (Wandsensor) an der Plakette 10 anliegt. Hinter dem Temperatursensor 5 ist in dem Gehäuse 2 ein Magnet 13 angeordnet, der mit der Plakette 10 kraftschlüssig zusammenwirkt. 5 Dadurch wird zum einen das Gehäuse 2 an der Topfwand 8 befestigt und zum anderen eine Verdrehsicherung realisiert, die das Gehäuse 2 an einem Verschwenken um die Bohrung 11 bzw. die Ausnehmung 9 hindert. Alternativ ließe sich die Verdrehsicherung auch durch eine Führung in der Ausnehmung 9, bspw. mittels eines nicht rotationssymmetrischen Querschnitts, erreichen.

Ein Kabel 14 verbindet den Bodensensor 3 mit einem RFID-Chip 15 in dem Gehäuse 2, wobei das Kabel 14 mit einer nicht dargestellten Zugentlastung versehen ist, um die Schwenkbewegung des Bodensensors 3 zum Gehäuse 2 auszugleichen und zu sichern. Der RFID-Chip 15 übernimmt die Funktion der Kommunikationseinrichtung (Funkchip) mit, der durch eine geeignete Sende-und Empfangseinrichtung bspw. in dem Kochfeld des Herdes abgefragt wird. Dazu spricht die Sendeeinrichtung des Kochfelds den Funkchip 15 an und induziert dabei elektrische Energie in dem Funkchip 15, der mit dieser induzierten Energie den Bodensensor 3 über das Kabel 14 abfragt und das erhaltene Signal wieder aussendet. Dieses wird dann von der Empfangseinrichtung des Kochfeldes empfangen.

Durch diese Ausbildung von Bodensensor 3 bzw. Funkchip 15, die gemeinsam ein Sensorelement bilden, kann der Elektronikmodul 1 erfindungsgemäß als 25 passives Bauteil ohne eigenständige Energieversorgung, bspw. in Form einer Batterie oder eines Anschlusskabels zu einer externen Spannungsquelle, ausgebildet sein.

Im Falle eines SAW-Sensors sind der Sensor 3, 5 und der Funkchip 15 in einem Gehäuse integriert. In der Darstellung gemäß Fig. 4 entfällt dann der separate Funkchip 15, der mit in die Gehäuse 3, 5 an der gezeigten Position aufgenommen ist.

An den Funkchip 15, unabhängig davon, ob er in das Gehäuse der Sensoren 3, 5 mit integriert oder wie dargestellt separat ausgebildet ist, ist eine für alle Sensoren 3, 5 gemeinsame Antenne 17 angeschlossen.

Aufgrund der bei passiven Sensorelementen nur begrenzt zur Verfügung stehenden Sendeleistung sind der Funkchip 15 und die Antenne 1/vorzugsweise in dem dem Kochfeld mit der Sende- und Empfangseinrichtung zugewandten (und der Wand 8 des Kochgefäßes 6) Bereich des Gehäuses 2 aufgenommen.

Für den erwähnten weiteren Temperatursensor 5 gilt entsprechendes. Dieser ist über ein entsprechendes Kabel 14 mit dem als RFID-Chip ausgebildeten Funkchip 15 verbunden.
Grundsätzlich könnte der Wandtemperatursensor 5 in Abweichung von der dargestellten Ausführungsform auch über einen eignen Funkchip bzw. eine eigene Kommunikationseinrichtung verfügen, die aber vorzugsweise auch passiv arbeitet, d.h. die für die Signalübertragung sowie ggf. die Temperaturmessung benötigte Energie aus der Anfrage durch die Sendeeinrichtung des Kochfeldes bezieht, bspw. durch induktive Kopplung mit der nicht dargestellten Sende- und Empfangseinrichtung im Bereich des Kochfeldes, oder durch Oberflächenwellensensortechnik.

Um eine sichere Signalübertragung zu gewährleisten, ist das Gehäuse 2 indem dem Kochfeld bzw. dessen Sende- und Empfangseinrichtung zugewandten Wandbereich (d.h. der der Wand 8 des Kochgefäßes 6 gegenüberliegenden Wand) und/oder Bodenbereich für Funkwellen durchgängig ausgebildet, wobei das Gehäuse zum Schutz der Elektronik wärmebeständig und wasserdicht ausgeführt ist. Hierfür bietet sich Kunststoff an. Die beschriebene Anordnung des Funkchips 15 und der damit verbundene kurze Abstand zum Signalempfängertragen zu der hohen Signalqualität bei.

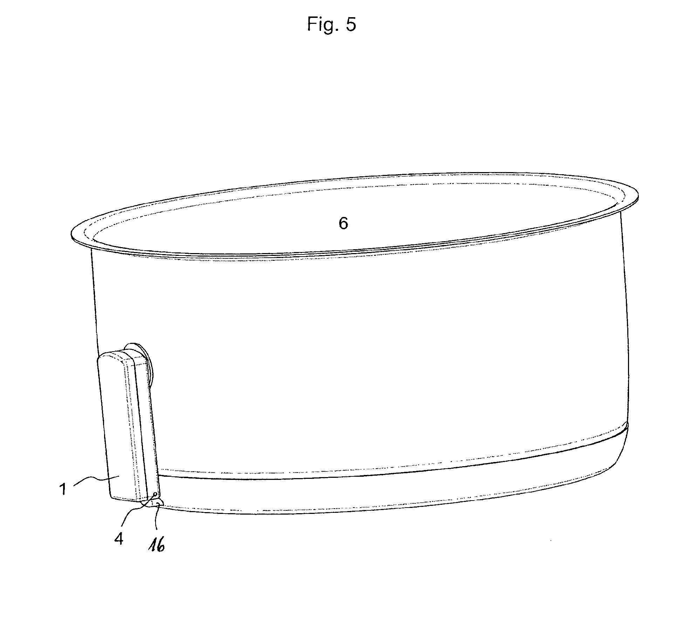

Das an dem Kochtopf 6 angebrachte Elektronikmodul 1 zeigt Fig. 5. Das Elektronikmodul 1 hat ungefähr die Größe und Form eines handelsüblichen USB-Sticks und ist im Vergleich zu dem als Kochtopf ausgebildeten Kochgefäß 6 verhältnismäßig klein, aber dennoch griffig, so dass er einfach und schnell an dem Kochtopf 6 befestigt und von diesem entfernt werden kann. Wie aus Fig. 5 deutlich wird, hat sich der Elektronikmodul 1 durch das Drehgelenk 4 an die Außenform des Kochtopfes 6 angepasst. Die Außenwand des Kochtopfes 6 kann auch deutlich schräger gestaltet sein, wie es z.B. bei einem Wok der Fall ist. Über das Drehgelenk 4 passt sich der Elektronikmodul 1 auch dieser Außenform an.

Wird der Kochtopf 6 auf das Kochfeld eines zum automatischen Kochen vorbereiteten Herdes gestellt und Wärme in den Topfboden 7 eingeleitet, misst der Bodensensor 3 die Wärme des Topfbodens 7 und kommuniziert den gemessenen Temperaturwert als geeignet ausgebildetes Signal drahtlos an die Heizleistungsregelung des Herdes zurück. Gleichzeitig misst der an der Topfwand 7 angebrachte Temperatursensor 5 die Erwärmung der Topfwand 7, wobei dieser Temperaturwert ebenso an die Heizleistungsregelung des Herdes gesendet wird. Je nach Kochprogramm und gewünschtem Kochergebnis stellt die Heizleistungsregelung bzw. -Steuerung unter Berücksichtigung der durch die Temperatursensoren 3, 5 des Elektronikmoduls 1 erfassten und übermittelten Temperatursignale die Heizleistung des Kochfeldes geeignet ein.

Nach Beendigung des automatischen Kochvorgangs kann der Kochtopf bzw. das Kochgefäß 6 einfach gereinigt werden, indem der Elektronikmodul 1 abgenommen wird. Dieser kann dann einfach an einem anderen Kochgefäß 6 verwendet werden, so dass es ausreichend ist, eine der Anzahl der Kochstellen angepasste Anzahl von Elektronikmodulen 1 vorzuhalten, ohne dass jedes Kochgefäß 6 selbst mit einem eigenen Elektronikmodul 1 ausgestattet werden muss. Um Korrosion in der Hülse 12 zu vermeiden, kann die Aufnahme 9 oder auch Hülse 12 bei abgenommenem Elektronikmodul 1 erfindungsgemäß verschlossen werden, bspw. durch einen Verschlussstopfen, der vorzugsweise aus Silikon ausgebildet sein kann. Das Verschließen dichtet die Aufnahme 9 vorzugsweise wasserdicht ab, so dass beim Reinigen des Kochgefäßes keine Feuchtigkeit eindringt.

### Bezugszeichenliste:

- 1: Elektronikmodul
- 2: Gehäuse
- 3: Bodensensor, Temperatursensor
- 4: Drehgelenk
- 5: Wandsensor, Temperatursensor
- 6: Kochgefäß, Kochtopf
- 7: Topfboden
- 8: Topf wand
- 9: Aufnahme
- 10: Plakette
- 11: Bohrung
- 12: Hülse
- 13: Magnet
- 14: Kabel
- 15: Kommunikationseinrichtung, Funkchip
- 16: Fühlerelement
- 17: Antenne

## Patentansprüche

1. Elektronikmodul (1) für die temperaturüberwachte Zubereitung von Gargut in einem Kochgefäß (6) mit einem Bodensensor (3) zur Erfassung der Temperatur des Bodens (7) eines Kochgefäßes (6) und mit einer Kommunikationseinrichtung (15) zur Signalübertragung der erfassten Temperatur an eine Steuerung oder Regelung der Heizleistung der Kochstelle zur Erwärmung des Kochgefäßes (6), **dadurch gekennzeichnet, dass** der Bodensensor (3) ein in eine Aufnahme (9) in dem Boden (7) des Kochgefäßes ein- und ausführbares Fühlerelement (16) aufweist, welches gelenkig an einem Gehäuse des Elektronikmoduls (1) festgelegt, und mit der Kommunikationseinrichtung (15) verbunden ist.

2. Elektronikmodul nach Anspruch 1, **dadurch gekennzeichnet, dass** das Fühlerelement (16) stabförmig ausgebildet ist.

3. Elektronikmodul nach Anspruch 1 oder 2, **dadurch gekennzeichnet, dass** das Gehäuse (2) des Elektronikmoduls (1) kraftschlüssig, insbesondere mittels eines Magneten (13), und/oder formschlüssig, insbesondere mittels eines metallischen Klettverschlusses, an einer Außenwand (8) des Kochgefäßes (6) befestigbar ist.

4. Elektronikmodul nach einem der vorhergehenden Ansprüche, **dadurch gekennzeichnet, dass** der Elektronikmodul (1) wenigstens einen weiteren Temperatursensor (5) mit einer zugeordneten Kommunikationseinrichtung aufweist.

5. Elektronikmodul nach einem der vorhergehenden Ansprüche, **dadurch gekennzeichnet, dass** die Kommunikationseinrichtung (15) zur drahtlosen Signalübertragung eingerichtet ist.

6. Elektronikmodul nach einem der Ansprüche 4 oder 5, **dadurch gekennzeichnet, dass** das Gehäuse (2) des Elektronikmoduls (1) zumindest abschnittsweise durchgängig für Funkwellen ist.

7. Elektronikmodul nach einem der vorhergehenden Ansprüche, **dadurch gekennzeichnet, dass** der Elektronikmodul (1) einen Anschluss für wenigstens einen externen Temperatursensor aufweist.

8. Kochgefäß mit einem Elektronikmodul (1) nach einem der vorhergehenden Ansprüche, **dadurch gekennzeichnet, dass** der Boden (7) des Kochgefäßes (6) eine Aufnahme (9) für das Fühlerelement (16) des Bodensensors (3) aufweist.

9. Kochgefäß nach Anspruch 8, **dadurch gekennzeichnet, dass** die Aufnahme (9) eine Tiefe von 20 bis 70 mm, vorzugsweise von 40 bis 60 mm, aufweist, wobei die Maximaltiefe den halben Durchmesser des Bodens (7) nicht überschreitet.

10. Kochgefäß nach einem der Ansprüche 8 oder 9, **dadurch gekennzeichnet, dass** die Aufnahme (9) eine in dem Boden (7) angeordnete Hülse (12) aufweist.

11. Kochgefäß nach einem der Ansprüche 8 bis 10, **dadurch gekennzeichnet, dass** die Aufnahme (9) mit einer Verdrehsicherung ausgebildet ist.

12. Kochgefäß nach einem der Ansprüche 8 bis 11, **dadurch gekennzeichnet, dass** die Außenwand (8) des Kochgefäßes (6) Elemente zur kraft- und/oder formschlüssigen Befestigung des Elektronikmoduls (1) aufweist.

13. Kochgefäß nach einem der Ansprüche 8 bis 12, **dadurch gekennzeichnet, dass** innerhalb des Kochgefäßes (6) Anschlussmöglichkeiten für Temperatursensoren vorgesehen sind.

14. Kochgefäß nach einem der Ansprüche 8 bis 13, **dadurch gekennzeichnet, dass** die Aufnahme (9) verschließbar ist.

## Claims

1. An electronic module (1) for the temperature-monitored preparation of food to be cooked in a cooking vessel (6), comprising a base sensor (3) for detecting the temperature of the base (7) of a cooking vessel (6), and a communications device (15) for signal transmission of the detected temperature to a controlling or regulating means for the heating power of the cooking zone for heating the cooking vessel (6), **characterised in that** the base sensor (3) comprises a sensor element (16) which can be guided into, and out of, an accommodating portion (9) in the base (7) of the cooking vessel and is secured in an articulated manner to a housing of the electronic module (1) and is connected to the communications device (15).

2. The electronic module according to claim 1, **characterised in that** the sensor element (16) is configured to be rod-shaped.

3. The electronic module according to claim 1 or 2, **characterised in that** the housing (2) of the electronic module (1) can be fastened to an outer wall (8) of the cooking vessel (6) in a non-positive manner, in particular by means of a magnet (13), and/or in positive manner, by means of a metal hook-and-loop fastener.

4. The electronic module according to any one of the preceding claims, **characterised in that** the electronic module (1) comprises at least one further temperature sensor (5) with an associated communications device.

5. The electronic module according to any one of the preceding claims, **characterised in that** the communications device (15) is configured for wireless signal transmission.

6. The electronic module according to any one of the claims 4 or 5, **characterised in that** the housing (2) of the electronic module (1) is permeable to radio waves at least in some portions.

7. The electronic module according to any one of the preceding claims, **characterised in that** the electronic module (1) comprises a connection for at least one external temperature sensor.

8. A cooking vessel comprising an electronic module (1) according to any one of the preceding claims, **characterised in that** the base (7) of the cooking vessel (6) comprises an accommodating portion (9) for the sensor element (16) of the base sensor (3).

9. The cooking vessel according to claim 8, **characterised in that** the accommodating portion (9) has a depth from 20 to 70 mm, preferably from 40 to 60 mm, the maximum depth not exceeding half the diameter of the base (7).

10. The cooking vessel according to any one of the claims 8 or 9, **characterised in that** the accommodating portion (9) comprises a sleeve (12) disposed in the base (7).

11. The cooking vessel according to any one of the claims 8 to 10, **characterised in that** the accommodating portion (9) is configured with an twist prevention means.

12. The cooking vessel according to any one of the claims 8 to 11, **characterised in that** the outer wall (8) of the cooking vessel (6) comprises elements for non-positive and/or positive fastening of the electronic module (1).

13. The cooking vessel according to any one of the claims 8 to 12, **characterised in that** connection facilities for temperature sensors are provided within the cooking vessel (6).

14. The cooking vessel according to any one of the claims 8 to 13, **characterised in that** the accommodating portion (9) can be closed.

## Revendications

1. Module électronique (1) pour la préparation à température contrôlée d'un produit à cuire dans un récipient de cuisson (6), comprenant un capteur de fond (3) destiné à détecter la température du fond (7) d'un récipient de cuisson (6) ainsi qu'un dispositif de communication (15) destiné à la transmission de signaux de la température acquise à un dispositif de commande ou de réglage de la puissance de chauffe de la plaque de cuisson pour chauffer le récipient de cuisson (6), **caractérisé par le fait que** ledit capteur de fond (3) présente un élément capteur (16) qui est apte à être introduit dans et retiré d'un logement (9) situé dans le fond (7) du récipient de cuisson et qui est fixé de manière articulée sur un boîtier du module électronique (1), et est relié audit dispositif de communication (15).

2. Module électronique selon la revendication 1, **caractérisé par le fait que** ledit élément capteur (16) est réalisé en forme de baguette.

3. Module électronique selon la revendication 1 ou 2, **caractérisé par le fait que** ledit boîtier (2) du module électronique (1) peut être fixé par adhérence, en particulier par le biais d'un aimant (13), et/ou à engagement positif, en particulier au moyen d'une fermeture Velcro métallique, sur une paroi extérieure (8) du récipient de cuisson (6).

4. Module électronique selon l'une quelconque des revendications précédentes, **caractérisé par le fait que** ledit module électronique (1) présente au moins un autre capteur de température (5) avec un dispositif de communication associé.

5. Module électronique selon l'une quelconque des revendications précédentes, **caractérisé par le fait que** ledit dispositif de communication (15) est conçu pour la transmission de signaux sans fil.

6. Module électronique selon l'une quelconque des revendications 4 ou 5, **caractérisé par le fait que** le boîtier (2) du module électronique (1) laisse passer, au moins par sections, les ondes radio.

7. Module électronique selon l'une quelconque des revendications précédentes, **caractérisé par le fait que** le module électronique (1) présente un raccord pour au moins un capteur de température externe.

8. Récipient de cuisson ayant un module électronique (1) selon l'une quelconque des revendications précédentes, **caractérisé par le fait que** le fond (7) du récipient de cuisson (6) présente un logement (9) pour ledit élément capteur (16) du capteur de fond (3).

9. Récipient de cuisson selon la revendication 8, **caractérisé par le fait que** ledit logement (9) présente une profondeur comprise entre 20 et 70 mm, de préférence entre 40 et 60 mm, la profondeur maximale ne dépassant pas le demi-diamètre du fond (7).

10. Récipient de cuisson selon l'une quelconque des revendications 8 ou 9, **caractérisé par le fait que** ledit logement (9) présente une douille (12) disposée à l'intérieur du fond (7).

11. Récipient de cuisson selon l'une quelconque des revendications 8 à 10, **caractérisé par le fait que** ledit logement (9) est réalisé avec une anti-rotation.

12. Récipient de cuisson selon l'une quelconque des revendications 8 à 11, **caractérisé par le fait que** la paroi extérieure (8) du récipient de cuisson (6) présente des éléments de fixation par adhérence et/ou à engagement positif du module électronique (1).

13. Récipient de cuisson selon l'une quelconque des revendications 8 à 12, **caractérisé par le fait que** des possibilités de raccordement pour des capteurs de température sont prévues à l'intérieur du récipient de cuisson (6).

14. Récipient de cuisson selon l'une quelconque des revendications 8 à 13, **caractérisé par le fait que** ledit logement (9) est apte à être fermé.
